Europäisches Patentamt

European Patent Office

Office européen des brevets

(11) Publication number: **0 334 503**
A2

## (12) EUROPEAN PATENT APPLICATION

(21) Application number: 89302212.9

(22) Date of filing: 06.03.89

(51) Int. Cl.4: **H04L 9/00**

(30) Priority: 24.03.88 GB 8807020

(43) Date of publication of application:
27.09.89 Bulletin 89/39

(84) Designated Contracting States:
AT BE CH DE ES FR GR IT LI LU NL SE

(71) Applicant: RACAL-GUARDATA FINANCIAL
SYSTEMS LIMITED
Western Road
Bracknell Berkshire RG12 1RG(GB)

(72) Inventor: Halliden, Paul William
26 Bishops Mead Laverstock
Salisbury Wiltshire SPI 1RU(GB)
Inventor: Avarne, Simon Anthony Blair
Oak Tree Cottage Passfield Common
Passfield Hampshire GU30 7RT(GB)

(74) Representative: Obee, Robert William
Racal Group Services Ltd. Group Legal
Department Richmond Court 309 Fleet Road
Fleet, Hants. GU13 8BU(GB)

(54) Data-processing apparatus and method.

(57) An encryption apparatus has a keyboard 1 for
the input of message data and a processor 2 for
encrypting that data under a working key. The work-
ing key is not, however, permanently stored in the
apparatus. Rather, the working key is derived by
encrypting "precursive key data" stored in a mem-
ory 5 of the apparatus under a key represented by,
or derived from, a password input via the keyboard,
and is erased after each use. In this way, the se-
crecy of the working key is not dependent on main-
taining the ultimate physical security of the apparatus against possible attempts to gain access to its
memory, but rather on the secrecy of the password
which is input to the apparatus only as and when it
is necessary to derive the key for performing the
encryption process.

## Data-Processing Apparatus and Method

The present invention relates to data-processing and more particularly to a data-encryption apparatus and method. The invention is concerned especially with the encryption of messages for effecting payments etc. which flow across the communications networks of banks or other financial institutions (or at least the generation of message authentication codes therefor), although in principle it may find utility for the encryption of messages in any communications system carrying sensitive information.

A typical process of encryption involves the performance of a series of arithmetic operations upon the data to be protected in accordance with a given set of rules, or algorithm, conditioned by a selected cryptographic key. A system in common usage is the so-called Message Authentication Code (MAC) as described in the American National Standards Institute (ANSI) standards X9.9 and X9.19. Within these standards the cryptographic algorithm is the Data Encryption Algorithm (DEA) as described in FIPS 46 and ANSI X3.92, and the cryptographic key is a selected 56-bit number. In practice the security of this and similar systems against unauthorised decoding of encrypted data - or fraudulent transmission of apparently-genuine encrypted data - depends on maintaining the secrecy of the particular key under which the data is to be encrypted and which must be known in order to successfully recover the original data during the subsequent process of decryption. Conventionally, therefore, electronic apparatus used for encrypting message data in banks etc. and which hold these vital keys in their memories must be subject to a strict regime of physical security to obviate the risk of surreptitious read-out of their memories by unauthorised persons.

The present invention, however, adopts an alternative approach to the problem of maintaining the secrecy of cryptographic keys in encryption apparatus and accordingly in one aspect resides in a cryptographic apparatus comprising:
means for the input of data to be encrypted;
processing means for encrypting that data in accordance with a cryptographic algorithm and an associated key;
memory means storing precursive key data;
means for the input of a password;
and processing means for deriving the said key from said precursive key data and password (or derivatives thereof);
whereby, in use, said key is not permanently stored but derived only when it is required for encrypting input data.

In another aspect the invention resides in a cryptographic method comprising the steps of:
storing precursive key data in an apparatus;
inputting data to be encrypted in said apparatus;
inputting a password to said apparatus;
deriving in said apparatus a key from said precursive key data and password (or derivatives thereof); and encrypting said input data in said apparatus in accordance with a cryptographic algorithm and said key;
wherein said key is not permanently stored but derived only when it is required for encrypting said input data.

In this way, the secrecy of the cryptographic key depends not on maintaining the ultimate physical security of the apparatus against possible attempts to gain access to its memory, but rather on the secrecy of the password which is input to the apparatus only as and when it is necessary to temporarily derive the key for performing the encryption process. If the apparatus should come into the hands of an unauthorised person at any other time and its memory read-out, all this would reveal is the data - termed herein "precursive key data" - which has to be combined with the password by the second-mentioned processing means to derive the key.

In practice, the combination of the password and precursive key data to derive the working key could be only a simple arithmetic operation although in a preferred embodiment the password itself constitutes a key for the encryption of the precursive key data in accordance with DES to arrive at the working key.

The password itself may, as in conventional access-control systems, be a multi-digit word or number which is known only to the person or persons authorised to operate the apparatus, and it may be made up from two or more part-passwords known to separate persons who must accordingly act in concert in order to operate the apparatus.

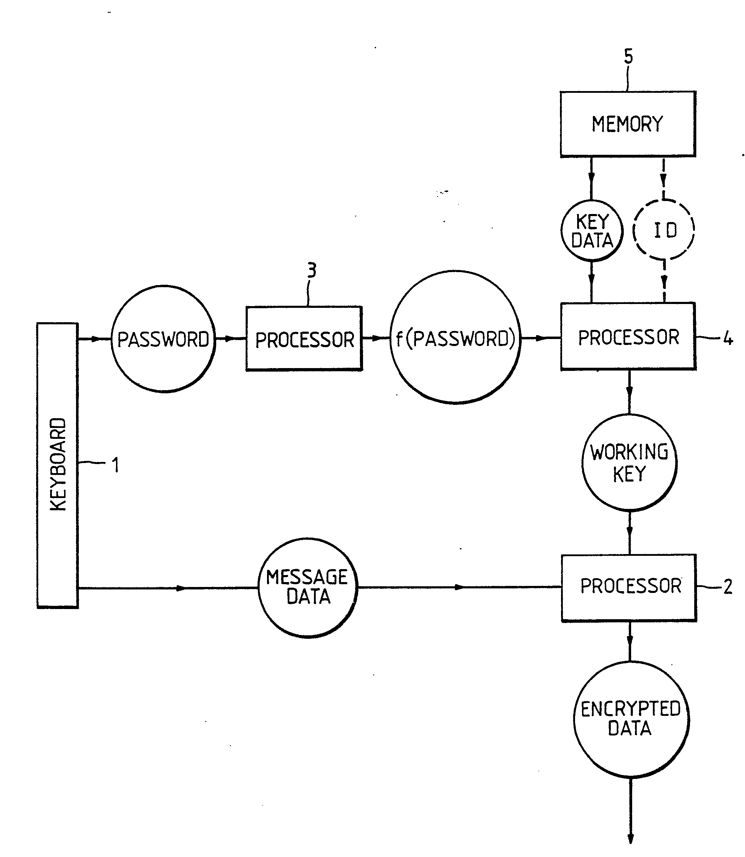

An embodiment of the invention will now be more particularly described, by way of example, with reference to the accompanying drawing which is a combined block diagram and flow chart of an apparatus in accordance with the invention and of the process performed therein.

For the purposes of this description the illustrated apparatus is assumed to be part of a terminal apparatus located at a bank branch for the transmission of financial messages to other such branches, or to a central computer.

In particular it may be used for encrypting message data to compute a message authentication code or MAC as part of a process as described in published United Kingdom patent application no 2190820, in which case the working key derived as described below would be used in place of the KEY 1 referred to in the aforesaid application.

With reference to the drawing, the message data to be encrypted is entered by means of a keyboard 1 into a processor 2 where it is encrypted in accordance with DES under a specific working key. This key is not held in any memory of the apparatus, however, but is derived when needed by the following process.

That is to say a password is entered by the keyboard 1 into another processing stage 3 of the apparatus, from which a derivative or function of the password is passed to a processor 4 (in practice integrated with the processor 2), wherein it constitutes the key for encryption in accordance with DES of "precursive key data" from a memory 5. The result of this encryption is the aforesaid working key for encryption of the message data.

The working key is automatically erased after use.

If desired, an individual identity or "electronic serial number" for the apparatus can also be implanted into the memory 5 at manufacture, which must be combined with the encryption of the other data in processor 4 to derive the correct working key. In this way it is ensured that a given working key can only be successfully recovered within the particular apparatus for which it is intended.

To cater for desired changes in the authorised users' password(s), programming means will be provided, under the control of the existing password(s), for modifying the precursive key data in memory 5 such as to derive the correct working key when encrypted under the new password(s). Similarly, this data would be modified when required to derive a selected new working key in combination with existing password(s) and/or "electronic serial number".

As previously indicated, an advantage of this apparatus is that the only data which could be revealed by any unauthorised inspection of the memory 5 is the precursive key data, which is insufficient to reveal the working key without also having knowledge of the password(s). Certain other operational advantages also follow from the principles embodied in this apparatus. For example, message data entry can be safely left in the hands of ordinary bank staff and the password holder(s) - who would be expected to be senior officials - need only be involved at the time of encryption. Further, because the data entered into the memory 5 when "initialising" the apparatus is not of itself essentially secret - only the passwords are - this task can be performed by staff who need not be operating under a strict security regime and similarly no special precautions need be taken to guard the apparatus in transit when being distributed to the destination bank branches, provided that notification of the corresponding passwords does not physically accompany the apparatus.

## Claims

1. A cryptographic apparatus comprising:
means (1) for the input of data to be encrypted; and processing means for encrypting that data in accordance with a cryptographic algorithm and an associated key;
characterised by:
memory means (5) storing precursive key data;
means (1) for the input of a password;
and processing means (4) for deriving the said key from said precursive key data and password (or derivatives thereof);
whereby, in use, said key is not permanently stored but derived only when it is required for encrypting input data.

2. An apparatus according to claim 1 wherein the second-mentioned processing means (4) is adapted to derive the said key by encryption of the precursive key data or a derivative thereof under a key represented by said password or a derivative thereof.

3. An apparatus according to claim 1 or claim 2 including memory means (5) storing identity data for that apparatus and wherein the second-mentioned processing means (4) is adapted to derive the first-mentioned key from said precursive key data, identity data and password (or derivatives thereof).

4. A cryptographic method which comprises:
inputting data to be encrypted in an apparatus; and encrypting that data in accordance with a cryptographic algorithm and an associated key;
characterised by the steps of:
storing precursive key data in the apparatus;
inputting a password to said apparatus; and deriving said key in the apparatus from said precursive key data and password (or derivatives thereof);
wherein said key is not permanently stored but derived only when it is required for encrypting said input data.

5. A method according to claim 4 wherein said key is derived by encryption of the precursive key data or a derivative thereof under a key represented by said password or a derivative thereof.

6. A method according to claim 4 or claim 5 including the steps of storing identity data for that apparatus and deriving the first-mentioned key from said precursive key data, identity data and password (or derivatives thereof).